# Europäisches Patentamt
# European Patent Office
# Office européen des brevets

(19)

(11) Publication number: **0 266 695**
**B1**

(12)

# EUROPEAN PATENT SPECIFICATION

(45) Date of publication of the patent specification:
16.05.90

(51) Int. Cl.⁵: **B65G 9/00**

(21) Application number: **87115976.0**

(22) Date of filing: **30.10.87**

(54) Peg for overhead trouser conveyor.

(30) Priority: **04.11.86 ES 8602891**

(43) Date of publication of application:
**11.05.88 Bulletin 88/19**

(45) Publication of the grant of the patent:
**16.05.90 Bulletin 90/20**

(84) Designated Contracting States:
**AT BE CH DE FR GB IT LI LU NL SE**

(56) References cited:
**DE-A- 3 320 405**
**GB-A- 2 164 628**
**GB-A- 2 164 629**
**NL-A- 8 205 032**

(73) Proprietor: **INVESTRONICA S.A., Tomás Breton, 62, E-28045 Madrid-7(ES)**

(72) Inventor: **Romero Lledo, Antonio, c/o Ardines No. 10 (Urb. Berzosas), Torrelodones (Madrid)(ES)**
Inventor: **Diaz-Zorita Gonzalez, Fernando, c/Virgen de Nuria No. 13, E-28027 Madrid(ES)**
Inventor: **Cristos, Juan Carlos, c/ Cardoso No. 2-3-H, Torrejon De Ardoz (Madrid)(ES)**

(74) Representative: **Puschmann, Heinz H. et al, Spott und Puschmann Patentanwälte Sendlinger-Tor-Platz 11, D-8000 München 2(DE)**

ACTORUM AG

**Description**

The subject of this invention is a peg for use in an overhead conveyor for trousers which are passed from one work station to another in a pressing process, having a hook formed from a cylindrical rod joined to a body portion of the peg.

In the tailoring industry variety of methods for carrying garments from one work station to another are used. One of such methods is with an overhead conveyor which incorporates a system of overhead rails, work stations, entries and turn-outs to the work stations, carriages running on the rails, and hangers or pegs slung from said carriages. In addition, said hangers or pegs have devices for holding the garments or panels.

in a known conveyor hanger assembly for carrying limp sheet-like workpieces the hanger consists of a body having an upper portion and a plurality of grippers associated with said body for each releasably holding a unit of work material. Each gripper comprising a generally vertically extending stationary gripping surface, a spring fixed to said body and including an elongated leg extending downwardly from said body generally opposite to said fixed gripping surface and inclined relative to said fixed gripping surface so that the upper end of said leg is located further from said stationary gripping surface than the lower end of said leg, and a grip element slidably supported on said elongated spring leg having an exterior gripping surface cooperating with said stationary grip surface: see GB 2 164 628 A.

For carrying other than limp sheet-like workpieces problems arise because according to their construction only workpieces of low weight can be carried. Further, for special processes like pressing a pair of trousers, besides loading and unloading operations, working operations have to be applied to the workpieces on the conveyor hanger assembly.

The process for the pressing of a pair of trousers normally involves two operations, one for the legs and the other for the upper section. Both of these operations are carried out at different work stations.

For trouser pressing, the peg of such an assembly must further be able to hold different shaped trousers, with different sizes and thickness of fabric; it must allow the trouser hanging and release operation to be quick and easy, it must be possible to press the garment without removing it from the hanger, it must be possible to turn the trousers so as to easily press the two legs, and it must make it possible to reverse the trousers quickly and easily after the first operation in order to carry out the second. In addition, because of the large number of pegs required, the design must be simple, economical and reliable.

There is thus a need for improved hangers or pegs for use in conveyor systems for carrying workpieces like trousers between work stations of an industrial production line.

SUMMARY OF THE INVENTION

It is an object of the invention to establish an improved peg for use in an overhead conveyor for trousers which are passed from one work station to another in a pressing process, having a hook formed from a cylindrical rod and joined to a body portion of the peg, characterized in that the body portion of the peg is formed from two inverted V-shaped plates which are clamped at their upper ends between two substantially horizontal rigid parts lying one above the other and to which parts the hook is attached, two substantially vertical end strips extending downwardly from respective ends of the rigid parts, a rectangular prism positioned between the lower ends of the inverted V-shaped plates and pivotally attached between the end strips to allow the prism to pivot between the legs of the V-shaped plates, and a handle attached to the rectangular prism for effecting pivotal movement thereof.

The peg according to the invention meets all of the foregoing specifications and allows that the clamped trousers remain hanging from the peg when passing all working stations and holds said trousers in position for pressing.

BRIEF DESCRIPTION OF THE FIGURES

Figure 1 is a perspective view of a peg in accordance with this invention slung from a conveyor system, clamping a pleated trouser;

Figure 2 is a front view of the peg of Figure 1;

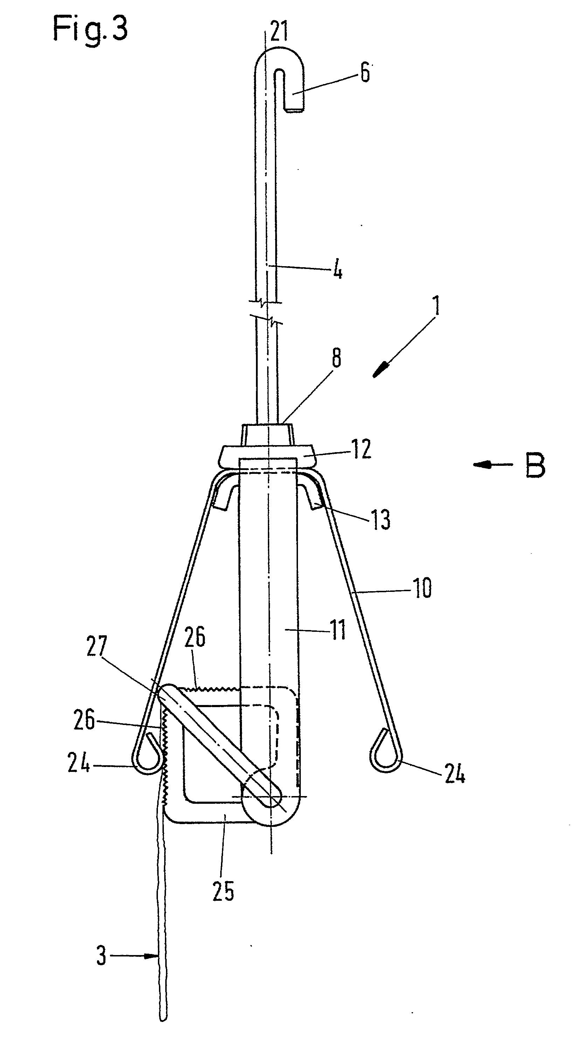

Figure 3 is a side view of the peg of Figure 1, seen from the left;

Figure 4 is a vertical cross-section along the line 20 in Figure 2 and seen in the direction of arrow A;

Figure 5 is a vertical cross-section along the line 21 in Figure 3 and seen in the direction of arrow B.

DETAILED DESCRIPTION

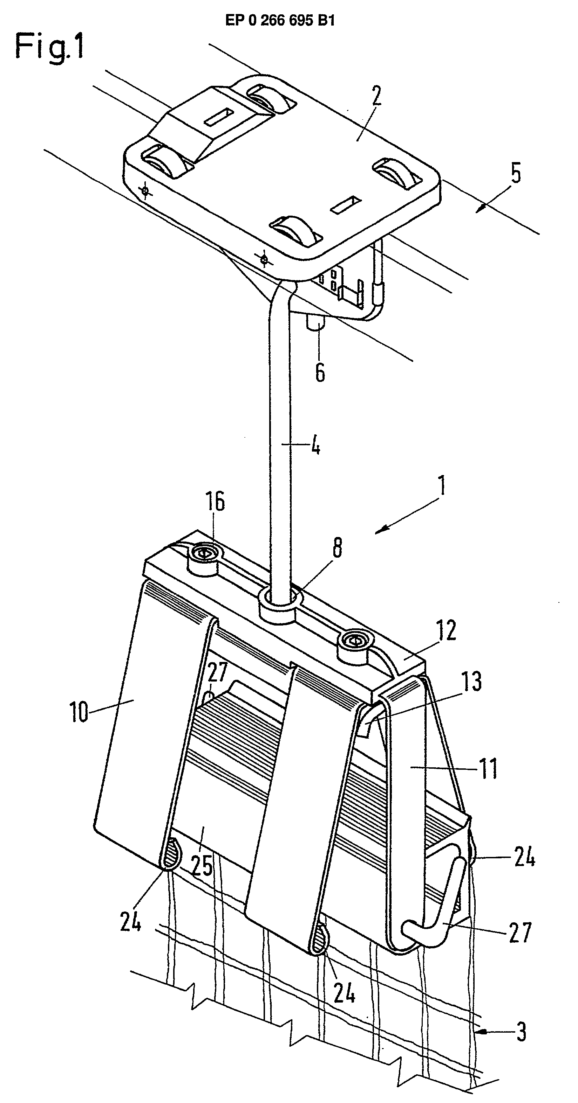

Referring to Figure 1 a peg 1 embodying the invention is illustrated in a perspective view and is connected to a carriage 2 which forms part of an overhead conveyor system 5 for carrying pairs of trousers 3 from one work station to another – which are not shown – in a pressing process.

The peg 1 is connected to the overhead conveyor 5 by means of a hook 4. Said hook is formed by a cylindrical rod shaped at one end 6 in such a way as to allow it to be slung from the overhead conveyor system 5: it will be understood that the shape of end 6 will depend on the nature of the overhead conveyor system 5.

The other end 7 of hook 4 is introduced into the body of the peg 1 through openings 8 and 9. This end of the hook has two openings 17 for engaging a pin each. In this way the hook 4 is joined to the body of peg 1, allowing rotation of the body relative to the hook.

The body of the peg is made up by two inverted V-shaped plates 10, two squared strips 11 and two rigid parts 12 and 13 which solidly unite the plates 10 and squared strips 11 under the pressure by means of bolts 15.

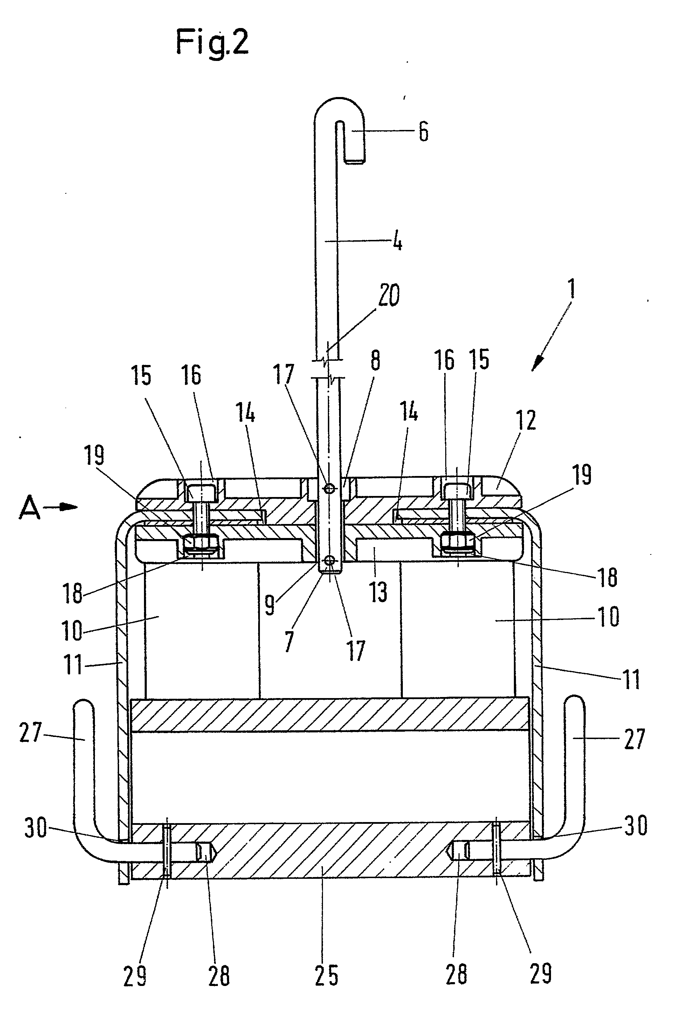

On the bottom side ends, part 12 has two slots 14 – see Figure 2 – which are suitably shaped so as to admit the plates 10 and the squared strips 11. In addition, there are two holes 16 shaped so as to admit said bolts 15. The upper part of said holes 16 is wider than the lower part, so as to house the head of bolts 15. A further hole 8 through which to pass the hook 4 is wider at the top than at the bottom, so as to admit engaging the pin in the upper hole 17.

Part 13 of the body has three holes also. The two holes 18 are aligned with those holes 16 in part 12. The holes 18 are suitably shaped to admit the nut 19 on the bolts 15. The two bolts 15, together with the corresponding nuts 19 provide the pressure required to keep the entire body of the peg rigid.

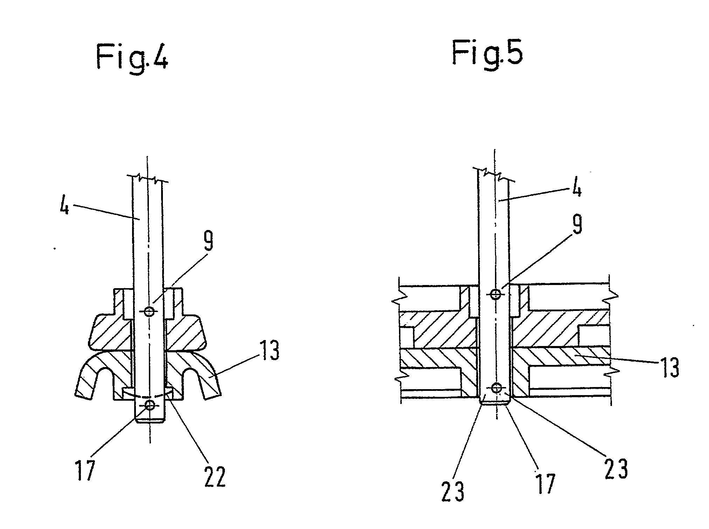

The hole 9 in part 13 of the body has a specially shaped surface at its bottom end, as it can be seen in Figures 4 and 5.

This end surface 22 is cylindrically shaped and has two inclined plane cuts 23, so that it is easy to turn the hook 4 in relation to the body of the peg and vice versa, and has one stable position, namely the one shown in Figure 5, in which the pin of the hole 17 is engaged in that cuts 23. Said stable position is necessary so that, during overhead movement, the trousers do not turn freely and so do not hook into other components of the overhead conveyor system.

The plates 10 of the body have a cylindrical finish at the bottom end 24, making it possible for the rectangular prism 25, pivotably connected to the strips 11, to slip on said plates. As said plates can move from their normal position, it is possible to clamp trousers 3 of different thicknesses.

The rectangular prism 25 has two serrated or roughened surfaces 26 in order to increase friction with the trousers in the clamping position, thus improving the clamping.

The rectangular prism 25 is pivotably connected to the body of the peg by means of handles 27. Said handles 27 are united with the rectangular prism 25 by placing in two circular pocket holes 28 within the rectangular prism 25 and secured by two pins 29, see Figure 2.

Said handles 27 further are housed in two holes 39 within the plates 11, so that the rectangular prism 25 can tilt manually as a result of the operation of said handles.

Trousers are loaded by placing the end of the garment a few centimetres into the area between the rectangular prism 25 and the end 24 of the plates 10. The prism is then tilted by means of the handles 27 towards the trousers, and the trousers are thus secured in the peg.

Under their own weight, the trousers tend to tilt the prism 25 in the same direction, thus increasing the pressure on the trousers and improving the clamping.

In order to release the trousers, the prism has to be tilted with the handles in the opposite direction to that of the load, and the trousers are removed.

In order to reverse the trousers, their free end is passed through the end opposite the one where it was already held, and the prism 25 is tipped, using the handles 27, to that side; in this way, the trouser is released at the clamped end and clamped at the free end in a single operation.

## Claims

1. A peg (1) for use in an overhead conveyor (2, 5) for trousers which are passed from one work station to another in a pressing process, having a hook (4) formed from a cylindrical rod joined to a body portion of the peg (1), characterized in that the body portion of the peg (1) is formed from two inverted V-shaped plates (10) which are clamped at their upper ends between two substantially horizontal rigid parts (12, 13) lying one above the other and to which parts (12, 13) the hook (4) is attached, two substantially vertical end strips (11) extending downwardly from respective ends of the rigid parts (12, 13), a rectangular prism (25) positioned between the lower ends of the inverted V-shaped plates (10) and pivotally attached between the end strips (11) to allow the prism to pivot between the legs of the V-shaped plates (10), and a handle (27) attached to the rectangular prism (25) for effecting pivotal movement thereof.

2. A peg according to claim 1, characterized in that two of the surfaces (26) of the prism (25) which come in contact with the trousers (3) in the clamping position, are serrated.

3. A peg according to claim 1, characterized in that hook (4) and body of the peg (1) are rotatably connected to each other.

4. A peg according to claim 3, characterized in that the connection is formed by holes (8, 9) in the rigid parts (12, 13) of the body of the peg and the end (7) of the hook (4), bearing two pins in openings (17) and introduced in said holes, whereby the hole (9) at its one end (22) is cylindrically shaped to define a stable position when in contact with one pin of the end (7) of the hook.

## Patentansprüche

1. Träger (1) für einen Hängeförderer (2, 5) für in einer Bügelstation von einem Arbeitsplatz zum nächsten zu transportierende Hosen (3) mit einem aus einem Rundrohr oder -stab bestehenden mit dem Körper des Trägers (1) verbundenen Haken (4), dadurch gekennzeichnet, daß der Körper des Trägers (1) aus zwei ungekehrt V-förmigen Platten (10) besteht, die an ihren jeweils oberen Enden zwischen zwei im wesentlichen waagerechten und übereinander angeordneten starren Teilen (12, 13) eingespannt sind, an denen der Haken (4) angeordnet ist, daß zwei im wesentlichen senkrechte stirnseitige Winkelstreifen (11) von den jeweils zugeordneten Enden der starren Teile (12, 13) nach unten weisen, daß ein quaderförmiger Block (25) zwischen den unteren Enden der umgekehrt V-förmigen Platten (10) und zwischen den Winkelstreifen (11) zwecks manueller Verstellung des quaderförmigen Blocks (25) zwischen den Schenkeln der Platten (10) mittels eines mit dem Block (25) verbundenen Griffes (27) angeordnet ist.

2. Träger nach Anspruch 1, dadurch gekennzeichnet, daß zwei Flächen (26) des Blocks (25), die in der Klemmstellung mit den Hosen zusammenwirken, gerillt oder wellig ausgebildet sind.

3. Träger nach Anspruch 1, dadurch gekennzeichnet, daß der Haken (4) und der Körper des Trägers (1) verdrehbar miteinander verbunden sind.

4. Träger nach Anspruch 3, dadurch gekennzeichnet, daß der Körper des Trägers und das Ende (7) des Hakens (4) über Bohrungen (8, 9) in den starren Teilen (12, 13) und über in Bohrungen (17) eingreifende Stifte verbunden sind und daß die Bohrung (9) an ihrem einen Ende (22) zwecks Definierung einer stabilen Position bei Anlage des Stiftes am Ende (7) des Hakens zylindrisch geformt ist.

## Revendications

1. Porte-charge (1) de transporteur aérien (2, 5) pour des pantalons que l'on déplace d'un poste de travail à un autre lors des opérations de repassage, présentant un crochet (4) formé d'une tige cylindrique associée à une partie formant corps du porte-charge (1), caractérisé en ce que le corps du porte-charge (1) est formé de deux plaques (10) en forme de V inversé qui sont bloquées par leurs extrémités supérieures entre deux éléments rigides sensiblement horizontaux (12, 13) disposés l'un au dessus de l'autre, éléments (12, 13) auxquels le crochet (4) est fixé, de deux bandes terminales (11) sensiblement verticales partant des extrémités respectives des éléments rigides (12, 13) en s'étendant vers le bas, d'un prisme rectangulaire (25) positionné entre les extrémités inférieures des plaques (10) en forme de V inversé et monté pivotant entre les bandes terminales (11) pour autoriser le prisme à pivoter entre les bras des plaques (10) en forme de V inversé, et d'une poignée (27) attachée au prisme rectangulaire (25) pour mener à bien le mouvement de pivot de celui-ci.

2. Porte-charge selon la revendication 1, caractérisé en ce que deux des surfaces (26) du prisme (25) qui viennent en contact avec les pantalons (3) dans la position de préhension sont dentelées.

3. Porte-charge selon la revendication 1, caractérisé en ce que le crochet (4) et le corps du porte-charge (1) sont associés l'un à l'autre de manière pivotante.

4. Porte-charge selon la revendication 3, caractérisé en ce que la connexion est formée par des trous (8, 9) percés dans les éléments rigides (12, 13) du corps du porte-charge et par l'extrémité (7) du crochet (4) recevant deux chevilles dans des ouvertures (17) et introduite dans lesdits trous, le trou (9) étant de forme cylindrique à son extrémité (22) pour définir une position stable lorsqu'il est en contact avec une cheville de l'extrémité (7) du crochet.

Fig.1

# Fig.2

Fig.3

Fig.4

Fig.5